# EUROPÄISCHE PATENTANMELDUNG

(11) **EP 0 663 534 A1**
(43) Veröffentlichungstag der Anmeldung: **19.07.1995**
(21) Anmeldenummer: 94119378.1
(22) Anmeldetag: 08.12.1994
(51) Int. Cl.: F16B 13/12, F16B 13/02

(54) **Dübel für Vierkantstifte**

(30) Priorität: 16.12.1993 DE 9319304 U
(71) Anmelder: fischerwerke Artur Fischer GmbH & Co. KG, D-72178 Waldachtal (DE)
(72) Erfinder: Luger, Uwe, D-72178 Waldachtal (DE)

(57) **Zusammenfassung**

Es wird ein Dübel für Vierkantstifte mit einem länglichen Schaft, einem in Längsrichtung verlaufenden Hohlraum und einem am äußeren Stirnende angeordneten Anschlagflansch vorgeschlagen. Der Hohlraum (10) weist einen im wesentlichen vierkantförmigen Querschnitt und die Wand des Schaftes (2) in Schaftlängsrichtung verlaufende und gegenüber angeordnete Bereiche (5) mit hintereinander angeordneten, zur Schaftspitze (7) hin abgeschrägte Rippen (6) auf. Die Rippen (6) überragen zumindest teilweise die Schaftoberfläche (4) und verkleinern dadurch beim Eindrücken in eine Bohrung den Querschnitt des Hohlraumes (10). Damit ist der Dübel zur sicheren Befestigung von Vierkantstiften geeignet und in Schlagmontage verankerbar.

## Beschreibung

Die vorliegende Erfindung betrifft einen Dübel für Vierkantstifte gemäß dem Oberbegriff des Hauptanspruchs.

Beim Befestigen von Vierkantstiften, wie sie insbesondere bei Rohrschellen für die Fallrohre von Dachrinnen verwendet werden, treten häufig Probleme beim Befestigen im Mauerwerk auf. Sofern kein Dübel in die Bohrung eingesetzt wird, ist es aufgrund des vierkantförmigen Querschnitts der Befestigungsstifte schwierig, den richtigen Bohrer zum entsprechenden Mauerwerk zu wählen. Bei zu großen Bohrlöchern sind keine ausreichenden Haltewerte zu erreichen und bei zu engen Bohrlöchern kann das Mauerwerk ausbrechen.Sofern ein herkömmlicher Dübel verwendet wird, bereitet dieser aufgrund des üblicherweise runden Querschnitts des Hohlraums ebenfalls Probleme bei der Befestigung, da keine ausreichende Verspreizung des Dübels und Verklemmung des Befestigungsstiftes erreichbar ist.

Der vorliegenden Erfindung liegt daher die Aufgabe zugrunde, einen Dübel für Vierkantstifte zu schaffen, der eine sichere Befestigung von Vierkantstiften in einem Mauerwerk gewährleistet.

Diese Aufgabe wird durch einen Dübel gemäß den Merkmalen des Hauptanspruchs gelöst. Weitere vorteilhafte Ausgestaltungen sind den Unteransprüchen zu entnehmen.

Der erfindungsgemäß ausgestaltete Dübel weist einen Hohlraum mit einem im wesentlichen vierkantförmigen Querschnitt auf. Damit wird erreicht, daß, auf die äußere Form des Vierkantstiftes abgestimmt, der Vierkantstift in dem Dübel optimal gehalten ist. Darüberhinaus weist die Wand des Schaftes zwei gegenüber angeordnete Bereiche auf, die in Schaftlängsrichtung verlaufen. In diesen Bereichen sind zur Schaftspitze hin abgeschrägte Rippen hintereinander angeordnet. Diese Rippen können aus der Schaftoberfläche heraus- und auch in den Hohlraum hineinragen. Ein Teil der Rippen kann auch in der Oberfläche des Schaftes verlaufen, um den Widerstand beim Eindrücken des Dübels in eine Bohrung zu verringern. Zweckmäßigerweise ragen die Rippen mindestens teilweise aus der Schaftoberfläche heraus und verkleinern beim Eindrücken des Dübels in eine Bohrung den Querschnitt des Hohlraumes. Die schräg verlaufenden Rippen können auch als zungenförmige Gebilde ausgestaltet sein, die an ihrem verjüngten Ende mit der Wand des Schaftes verbunden sind. Wesentlich ist, daß durch den Aufbau des Dübels beim Eindrücken desselben in die Bohrung des Mauerwerks die nach außen stehenden Rippen in Richtung Schaftmitte gedrückt werden und dadurch den Querschnitt des Hohlraumes verringern. Beim darauffolgenden Einschlagen eines Vierkantstiftes drückt dieser wiederum gegen die nach innen gedrückten Rippen, so daß durch das Nachaußen-drücken ein Verklemmen im Mauerwerk erreicht wird. Die Rippen nehmen somit eine Doppelfunktion war, in dem sie einerseits den Vierkantstift und andererseits den Dübel im Mauerwerk verklemmen.

Sofern der Dübel ausreichend dünnwandig ausgebildet ist, können die Rippen die vorstehend beschriebene Funktion ausüben. Bei einer dicker ausgestalteten Wand des Dübelschaftes kann gemäß einer bevorzugten Ausführungsform in dem Bereich um die Rippen die Wand des Schaftes dünner ausgebildet sein, damit die Rippen eine entsprechende Elastizität für die Bewegung in Richtung des Hohlraumes erhalten.

Gemäß einer weiteren zweckmäßigen Ausführungsform ist der Dübel als einstückiges Kunststoffspritzteil hergestellt, wodurch eine kostengünstige Fertigung des Spezialdübels möglich ist.

Nachfolgend wird die Erfindung anhand eines Ausführungsbeispiels in Verbindung mit den begleitenden Zeichnungen näher erläutert.

Es stellen dar:
- Figur 1: eine perspektivische Ansicht des erfindungsgemäßen Dübels;
- Figur 2: eine Draufsicht auf den Dübel;
- Figur 3: einen Längsschnitt durch den Dübel und
- Figur 4: einen Querschnitt entlang der Linie A-A.

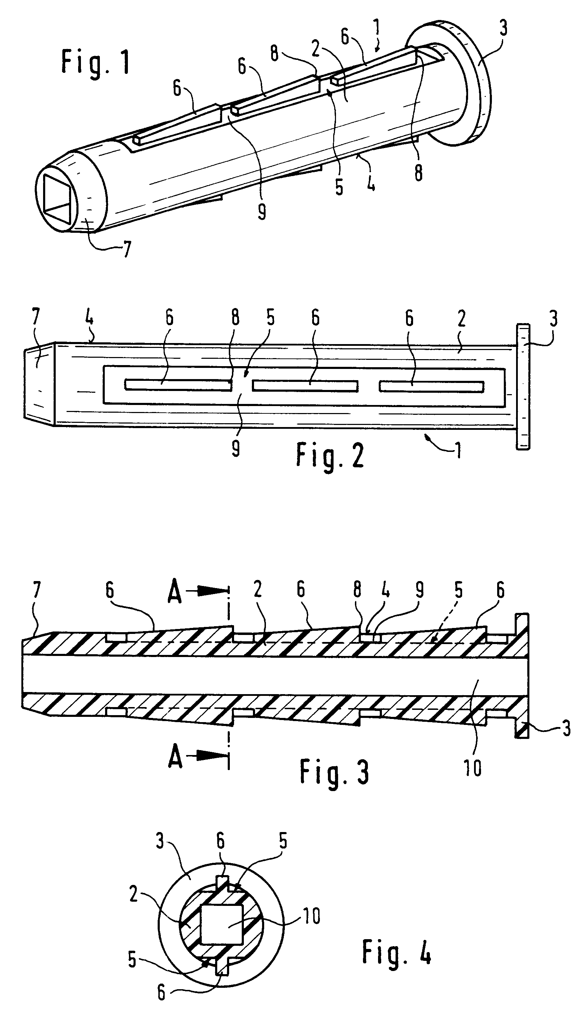

Figur 1 zeigt den Dübel 1 in perspektivischer Ansicht mit dem länglichen Schaft 2 und den am einen Stirnende angeordneten Anschlagflansch 3. In der Oberfläche 4 des Schaftes 2 ist ein in Längsrichtung des Schaftes 2 sich erstreckender Bereich 5 vorgesehen, der gegenüber der Oberfläche 4 vertieft ausgebildet ist. Die Wandstärke des Schaftes 2 ist somit in diesem Bereich dünner ausgestaltet. In dem Bereich 5 sind in Längsrichtung hintereinander angeordnete Rippen 6 vorgesehen. Die Anzahl der Rippen richtet sich nach den jeweiligen Erfordernissen. Im vorliegenden Ausführungsbeispiel sind drei Rippen 6 dargestellt. Die Rippen 6 sind in Richtung der Spitze 7 des Dübels 1 hin abgeschrägt, so daß sie in einer Bohrung mit dem aus der Oberfläche 4 des Schaftes 2 herausstehenden Ende 8 der Rippen als Widerhaken wirken können. Die vorstehend beschriebene Ausgestaltung wird in der Figur 2 in der Draufsicht noch einmal verdeutlicht.

Aus Figur 3 ist die Wandstärke des Dübelschaftes 2 und der Rippen 6 ersichtlich. Die einzelnen Rippen 6 sind in dem jeweiligen Bereich 5 mit Abstand zueinander angeordnet, so daß noch ein kleiner Zwischenraum 9 zwischen den Rippen entsteht. Die Wandstärke des Schaftes 2 in dem Bereich 5 ist, wie durch die gestrichelten Linien dargestellt, dünner als im übrigen Bereich des Schaftes 2. Wie aus der Figur 3 ersichtlich, sind auf beiden Seiten des Schaftes 2 sich gegenüberliegende Bereiche 5 mit Rippen 6 vorgesehen. In dem Ausführungsbeispiel ist die Dicke der Rippen 6 im Bereich der der Spitze 7 zugewandten Ende entsprechend der übrigen Wandstärke des Schaftes. Dies verbessert die Herstellung des Dübels als einstückiges Kunststoffspritzgußteil.

Figur 4 zeigt zur Verdeutlichung noch einen Querschnitt durch den Schaft 2 entlang der Linie A-A mit leicht eingedrückten Rippen 6, so daß der Querschnitt des Hohlraums 10 verringert ist und den darin einzuführenden Vierkant festhält. Aus der Abbildung ist die Doppelfunktion der Rippen 6 - Verklemmen des Vierkants im Hohlraum 10 und des Dübels 1 im Mauerwerk - ersichtlich.

## Patentansprüche

1. Dübel für Vierkantstifte mit einem länglichen Schaft, mit einem in Längsrichtung verlaufenden Hohlraum und einem am äußeren Stirnende angeordneten Anschlagflansch, **dadurch gekennzeichnet**, daß der Hohlraum (10) einen im wesentlichen vierkantförmigen Querschnitt und die Wand des Schaftes (2) in Schaftlängsrichtung verlaufende und gegenüber angeordnete Bereiche (5) mit hintereinander angeordneten zur Schaftspitze (7) hin abgeschrägte Rippen (6) aufweist, die mindestens teilweise aus der Schaftoberfläche (4) herausstehen und beim Eindrücken in einer Bohrung den Querschnitt des Hohlraumes (10) verkleinern.

2. Dübel nach Anspruch 1, **dadurch gekennzeichnet**, daß die Wand des Schaftes (2) in dem Bereich um die Rippen dünner ausgebildet ist.

3. Dübel nach Anspruch 1 oder 2, **dadurch gekennzeichnet**, daß er als einstückiges Kunststoffspritzgußteil (1) hergestellt ist.
